# DEMANDE DE BREVET EUROPEEN

(11) **EP 3 309 925 A1**
(43) Date de publication de la demande: **18.04.2018**
(21) Numéro de dépôt: 17196672.4
(22) Date de dépôt: 16.10.2017
(51) Int. Cl.: H02J 7/00, H02J 7/02, H02J 50/40

(54) **INSTALLATION DE CHARGE PAR INDUCTION D'AU MOINS UN APPAREIL ÉLECTRONIQUE**

(30) Priorité: 17.10.2016 FR 1660024
(71) Demandeur: ATV+, 03200 Vichy (FR)
(72) Inventeur: BOURAK, Joël, 03200 VICHY (FR); ROUSSEAU, Stéphane, 03700 BRUGHEAS (FR)
(74) Mandataire: Dennemeyer & Associates S.A.

(57) **Abrégé**

Installation de charge par induction d'au moins un appareil électronique (8), comportant au moins une zone de réception d'au moins un appareil électronique (8), ladite zone étant pourvue, de manière non amovible, d'au moins une bobine primaire reliée à une source d'électricité, l'installation comprenant :
- au moins un module (1) recevant une bobine secondaire, ledit module étant fixé, de manière amovible, sur une des faces (5) d'une paroi (6, 7) de l'appareil électronique (8),
- un meuble pourvu d'au moins une zone de réception, fixe, équipée d'au moins une bobine primaire, caractérisée en ce que le module (1) est configuré en enveloppe souple et en ce que le module (1) est pourvu d'une patte (3) équipée d'au moins une prise (4) micro USB adaptée à au moins un type de prise (9) micro USB équipant l'appareil électronique (8).

## Description

La présente invention concerne une installation de charge par induction d'au moins un appareil électronique.

Ici, l'expression « appareil électronique » désigne tout appareil dédié à la communication, vocal et/ou de données, via un réseau de communications non filaire. Il s'agit donc de téléphones de type GSM, fréquemment appelés sans fil ou cellulaires, de smartphones, de tablettes ou encore de mini ordinateurs également désignés par le terme ultraportables. Ces divers appareils ont en commun un encombrement et un poids suffisamment faibles pour être aisément transportables, par exemple dans une poche ou un sac.

Cette facilité de transport implique que ces appareils ont une réserve en électricité réduite, les batteries embarquées ne permettant généralement pas une autonomie supérieure à 8H en utilisation. Seules les tablettes disposant d'une batterie d'une capacité de 6000mAh peuvent atteindre une autonomie, en utilisation, allant jusqu'à 12H. Néanmoins, ce type d'appareils ne représentent qu'une faible part des appareils en circulation, la plupart des appareils en circulation ont une capacité voisine de 2000mAh, soit environ 3 H d'autonomie en utilisation. De ce fait, il est nécessaire de recharger, au moins une fois par jour, de tels appareils électroniques.

La recharge s'effectue généralement par l'intermédiaire d'un chargeur, en fait un adaptateur 5V relié par un fil, d'une part, à une source d'électricité en 220V ou en 110V et, d'autre part, à l'appareil. Si un tel mode de chargement est efficace et rapide, il n'en demeure pas moins contraignant car l'usager doit transporter son chargeur et trouver une source d'électricité sur laquelle brancher le chargeur.

Pour remédier à cet inconvénient, on connait des chargeurs sans fil, basés sur l'induction. Dans ce cas, deux bobines électromagnétiques, dites primaire et secondaire, isolées électriquement et situées pour l'une sur l'appareil électronique et pour l'autre sur un dispositif relié à une source d'électricité, assurent la charge de l'appareil par transfert d'énergie via un champ électromagnétique. Une telle solution évite le branchement de l'appareil au chargeur, il suffit de poser ce dernier sur un chargeur pour que le transfert d'électricité soit initié, cela sans qu'une liaison filaire soit établie.

Une telle solution implique que l'appareil électronique soit équipé d'une bobine secondaire, avantageusement adaptée à la bobine primaire. En d'autres termes, on rencontre fréquemment des chargeurs par induction dédiés à un appareil, ou pour le moins à une série d'appareils d'un même constructeur. Afin de pouvoir utiliser une charge par induction avec des appareils électroniques non spécifiquement adaptés à un tel moyen de charge, typiquement dépourvus de bobine secondaire, ou avec des appareils électroniques non dédiés à un chargeur donné, on connait par WO-A-2012 081 028 un accessoire dénommé connecteur qui assure la liaison entre un récepteur d'énergie, abritant la bobine primaire, et, en l'espèce, un téléphone mobile. Un tel accessoire est encombrant. De plus il n'est pas solidaire du téléphone ou du récepteur, ce qui implique pour l'utilisateur le transport et le stockage de l'accessoire, de façon similaire au transport et au stockage d'un chargeur par fil. On connait également par US-A-2007/182367 une installation alimentée par une source externe d'électricité et permettent, contre paiement, l'accès à des casiers de charge par induction d'appareils électroniques. Les casiers comprennent au moins une bobine primaire et des bobines secondaires sont fixées sur les appareils pour assurer la charge. Une telle solution nécessite la réalisation d'accessoires spécifiques pour les bobines secondaires à fixer aux appareils. Une telle solution est complexe à mettre en oeuvre et certains appareils ne peuvent pas être aisément équipés avec la bobine secondaire.

C'est à ces inconvénients qu'entend plus particulièrement remédier l'invention en proposant une installation de charge par induction adaptée au chargement de tous les types d'appareils électroniques tels que définis dans le préambule, ne nécessitant pas le transport d'un accessoire supplémentaire par l'usager, d'une fabrication et d'une mise en oeuvre aisées.

A cet effet, l'invention a pour objet une installation de charge par induction d'au moins un appareil électronique, comportant au moins une zone de réception d'au moins un appareil électronique, ladite zone étant pourvue, de manière non amovible, d'au moins une bobine primaire reliée à une source d'électricité, l'installation comprenant :
- au moins un module recevant une bobine secondaire, ledit module étant fixé, de manière amovible, sur une des faces d'une paroi de l'appareil électronique,
- un meuble pourvu d'au moins une zone de réception, fixe, équipée d'au moins une bobine primaire et occupant, au moins partiellement, une partie du volume du meuble, caractérisée en ce que le module est configuré en enveloppe souple et en ce que le module est pourvu d'une patte équipée d'au moins une prise micro USB adaptée à au moins un type de prise micro USB équipant l'appareil électronique.

Ainsi, l'utilisateur n'a pas à transporter un accessoire supplémentaire, le module étant solidaire de son appareil électronique, cela sans affecter sensiblement l'encombrement et le poids de l'appareil. Pour recharger son appareil, l'utilisateur pose ce dernier sur une zone de réception de l'installation équipée de la bobine primaire. Un tel module a une géométrie adaptée pour être fixé sur tout type d'appareil électronique, ce qui permet le chargement de ce dernier, qu'il soit ou non adapté à une charge par induction. Les caractéristiques de la zone de réception de l'appareil assure une utilisation simple, l'usager ayant à poser simplement son appareil sur la zone, dans la partie du volume du meuble qui lui est dédiée.

Selon des aspects avantageux mais non obligatoires de l'invention, une telle installation peut comprendre une ou plusieurs des caractéristiques suivantes:
- le module est fixé sur une face externe d'une paroi d'un appareil électronique par un adhésif non permanent ou par des bandes auto-agrippantes.
- Le module est fixé sur une face interne d'une paroi constitutive de l'appareil électronique.
- Chaque zone de réception est ménagée dans des étagères fixées dans le meuble.
- La zone de réception est formée par la face supérieure de chaque étagère.
- La zone de réception d'au moins une étagère est pourvue d'au moins un organe de maintien d'un appareil à recharger.
- La zone de réception est pourvue d'orifices adaptés pour coopérer avec des ergots ménagés sur une face des organes de maintien.
- Les organes de maintien sont disposés deux par deux, de sorte à former un angle droit.
- Une porte assure un accès dédié à une partie de volume définie.
- Chaque porte est pourvue d'une serrure spécifique.

L'invention sera mieux comprise et d'autres avantages de celle-ci apparaitront plus clairement à la lecture de la description qui va suivre de plusieurs modes de réalisation de l'invention, donnée à titre d'exemple non limitatif et faite en référence aux dessins suivants dans lesquels:
- La figure 1 est une vue en perspective d'un module équipé de la bobine secondaire conforme à un mode de réalisation de l'invention,
- la figure 2 est une vue en perspective, à la même échelle, du module de la figure 1, en configuration de pré-montage dans un appareil électronique,
- la figure 3 est une vue en perspective, à une autre échelle, d'un meuble recevant plusieurs zones équipées des bobines primaires, selon un mode de réalisation de l'invention,
- la figure 4 est une vue en perspective, partielle et à une autre échelle, du meuble de la figure 3, ouvert et sans la porte, les zones de réception des bobines primaires étant symbolisées par des pointillés,
- la figure 5 est une vue de dessus, à une autre échelle, d'une zone de réception des bobines primaires dans un meuble, selon un autre mode de réalisation et
- la figure 6 est une vue en perspective, à plus grande échelle d'un élément constitutif de la zone de réception illustrée à la figure 5.

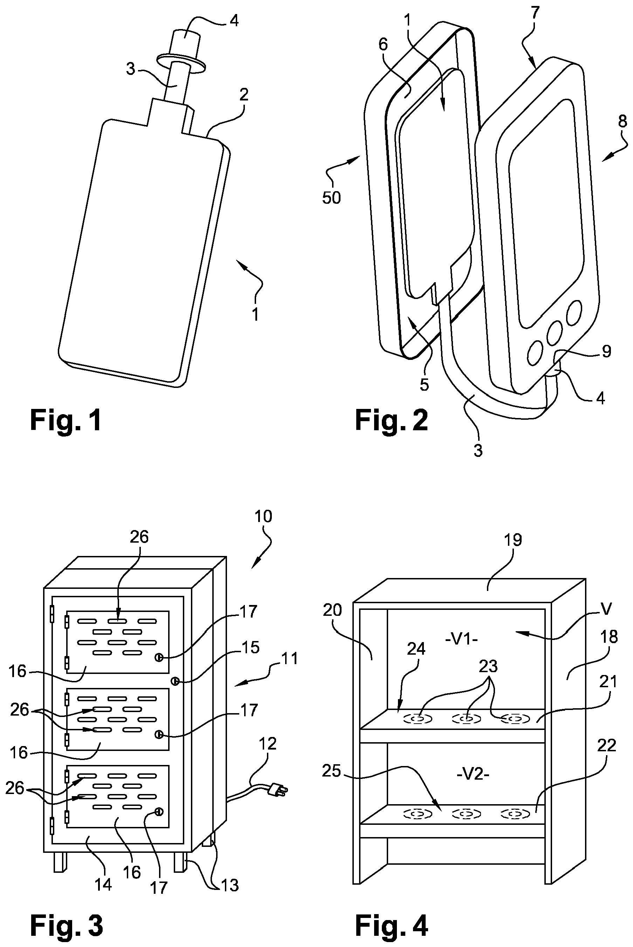

La figure 1 illustre un premier mode de réalisation d'un module, équipé d'une bobine secondaire, conforme à l'invention, avant sa mise en place sur un appareil électronique. Le module 1 se présente sous la forme d'une enveloppe, pourvue d'une certaine souplesse dont la limite est donnée par la résistance au cisaillement du fil constitutif de la bobine secondaire logée dans le module. Cette bobine, non visible, occupe avantageusement la quasi-totalité du volume de l'enveloppe 1. Cette dernière est ici configurée en rectangle. On conçoit que dans d'autres modes de réalisation, l'enveloppe est de forme carrée ou circulaire. Dans tous les cas, quelle que soit la forme de l'enveloppe 1, celle-ci a une épaisseur très inférieure à ses autres dimensions. En d'autres termes, l'aspect global du module 1 est celui d'une feuille.

Un des petits côtés 2 de l'enveloppe 1 est pourvu d'une patte 3 équipée à son extrémité libre d'une prise 4, de type micro USB. Cette prise est adaptée au standard de la zone de distribution de l'appareil électronique sur lequel sera monté le module 1. En d'autres termes, la prise 4 est de type A, B, C ou dédié aux appareils commercialisés par la société Apple. En variante, la patte 3, de fait une gaine de protection des fils reliant la prise 4 à la bobine secondaire, est pourvue de plusieurs prises, chacune correspondant à un type micro USB, ce qui permet un emploi universel du module 1.

Selon un mode de réalisation illustré à la figure 2, le module 1 est intercalé entre la face interne 5 d'une coque 6 d'un appareil électronique 8 et une face 7, dite interne, de l'appareil électronique 8. Ici, l'appareil électronique 8 est un téléphone de type GSM ou cellulaire. On conçoit que l'appareil électronique peut être un smartphone, une tablette ou autre. Dans tous les cas, il est équipé d'une coque ou au moins d'une partie de paroi amovible, afin de permettre l'accès à l'intérieur de l'appareil. Les dimensions du module 1 sont généralement comprises entre 6 cm et 10 cm de long, 2 cm et 6 cm de large et 0,5 mm et 2 mm d'épaisseur, le poids du module 1 est inférieur à 10 g.

Selon un autre mode de réalisation, le module 1 est fixé, de manière amovible, sur une face externe 50 de l'appareil 8, ici la face externe 50 de la coque 6. Dans ce cas, la fixation est effectuée par un adhésif non permanent, par des bandes auto-agrippantes ou d'autres systèmes connus en soi. Dans tous les cas, que le module 1 soit situé à l'extérieur ou à l'intérieur de l'appareil électronique, ses dimensions et son poids ne génèrent aucun changement notable dans l'encombrement de l'appareil 8. L'utilisateur n'observe donc aucun changement significatif dans la prise en main et l'utilisation de l'appareil 8.

La prise 3 de la patte 3 du module 1 est introduite dans une prise 9, de forme complémentaire, équipant l'appareil 8. En équipant ainsi l'appareil 8, il est possible de recharger ce denier par induction, le module 1 étant présent en permanence, et avantageusement branché en permanence sur la batterie de l'appareil 8, tout en restant amovible. Ainsi, pour réaliser la maintenance ou une intervention sur l'appareil 8, il convient de désolidariser le module 1 de l'appareil 8. Il est également possible, par exemple pour relier l'appareil 8 à un autre appareil électronique, de débrancher la prise 4 pour la remplacer par un câble micro USB introduit dans la prise 9 de l'appareil 8, cela sans désolidariser le module 1 de l'appareil 8.

En cas d'absence de chargeur par induction disponible, l'utilisateur peut débrancher la prise 4 de l'appareil 8 et brancher ce dernier sur un chargeur filaire ou une autre source d'énergie telle une batterie de secours ou autre, connue en soi.

Pour effectuer la charge par induction, il convient de poser le module 1 comportant la bobine secondaire sur une zone de réception équipée d'une bobine primaire, reliée à une source d'électricité, quelle que soit celle-ci. En effet, le transfert d'énergie entre deux bobines par des ondes électromagnétiques nécessite que les deux bobines soient très proches, à savoir 1,5 cm au plus pour un transfert d'énergie optimal.

L'installation, selon l'invention, comprend un meuble 10, illustré à la figure 3. Le meuble 10 est réalisé en un matériau assurant une protection contre les rayonnements électromagnétiques. Avantageusement, mais non exclusivement, le meuble 10 est en métal, par exemple en aluminium. En variante, il est en un matériau en lui-même non isolant mais pourvu d'un revêtement adapté pour assurer l'isolation contre les rayonnements électromagnétiques.

Le meuble 10 est pourvu, avantageusement sur une face non visible, par exemple sa face arrière 11 lorsqu'il est en appui contre une cloison, d'un coffret électrique assurant la liaison, par un câble 12, avec une source d'électricité externe, non illustrée. Un tel coffret étant connu en soi, il ne sera pas décrit plus précisément ici. Cette source est, avantageusement, le réseau électrique domestique. En variante, il s'agit d'une installation photovoltaïque ou autre.

Pour des raisons de stabilité et de sécurité, le meuble 10 est avantageusement fixé soit à un mur d'appui, soit au sol. En variante, les pieds 13 sont remplacés par des roulettes, permettant ainsi de déplacer, si besoin, le meuble 10.

Le meuble 10 est pourvu d'au moins une porte 14. La porte 14 est équipée d'une serrure 15, limitant l'accès de l'ensemble du volume interne V du meuble 10 aux seules personnes autorisées. Sur la porte 14, plusieurs portes 16, de dimensions moindres et ici illustrées au nombre de trois, sont ménagées.

Les portes 16 ont des dimensions telles qu'elles n'autorisent l'accès qu'à une partie définie, ici V1, V2, du volume V du meuble 10. Les portes 16 peuvent être de dimensions et/ou formes différentes, selon la partie V1, V2 du meuble à laquelle elles sont associées. Chaque porte 16 est équipée d'une serrure 17 différente. Ainsi un utilisateur ne peut avoir accès qu'à une partie V1, V2 donnée du volume V. On conçoit que les serrures 15 et 17 peuvent être des serrures à clef, à codes, magnétiques, électroniques ou autres.

La figure 4 illustre le meuble 10, sans la porte 14, ce qui permet de visualiser ici deux parties V1, V2 du volume V. Ici, les deux parties V1, V2 du volume V accessibles par deux portes 16 différentes, sont celles correspondant aux deux portes 16 du haut à la figure 3. Chaque partie V1, V2 du volume V est délimitée, outre la porte 14, par les parois 18 à 20 du meuble 10 et par une étagère respectivement 21, 22. En d'autres termes les parties V1, V2 du volume V correspondent à des compartiments indépendants ménagés dans le volume V du meuble 10.

Les étagères 21, 22 ont, chacune, une épaisseur suffisante pour recevoir au moins une bobine primaire, schématiquement représentée par des pointillés 23. En disposant plusieurs bobines 23, par exemple trois comme à la figure 4, sur chaque étagère 22, 23 on assure une charge par induction d'un appareil 8, quelle que soit la zone de l'étagère où on pose l'appareil 8. Chaque bobine primaire 23 est, dans l'exemple, noyée dans l'étagère 21, 22 de sorte qu'il ne puisse y avoir qu'une transmission par ondes électromagnétiques entre les bobines primaire et secondaire lorsque l'appareil 8 est sur l'étagère 21, 22. En variante non illustrée, les bobines 23 sont introduites, de manière définitive ou non, dans des compartiments ménagés dans les étagères 21, 22. Une telle configuration permet d'accéder aisément au bobine, par exemple pour de la maintenance.

Chaque étagère 21, 22 est réalisée, ou revêtue, par un matériau isolant électriquement. On conçoit que la face 24, 25 de l'étagère 21, 22 qui est destinée à recevoir un appareil 8 est décorée et/ou pourvue d'une signalétique permettant d'identifier précisément la position de la bobine 23. Ainsi lorsque l'on pose l'appareil 8 sur une étagère 21 , 22 et lorsque la bobine primaire 23 est reliée à une source d'électricité et qu'elle est active, le module 1 de l'appareil 8 reçoit les ondes électromagnétiques émises par la bobine secondaire 23. Ces ondes électromagnétiques sont converties par le module en un courant électrique de 5V et 1A au maximum.

Le fonctionnement d'une telle installation génère de la chaleur, ce qui nécessite de prévoir des ouvertures 26 ménagées dans les portes 16 et permettant de limiter la hausse de la température dans le meuble 10. Dans des modes de réalisation non illustrés, la chaleur émise est collectée, par des moyens connus en soi tels qu'un échangeur thermique équipant une face du meuble.

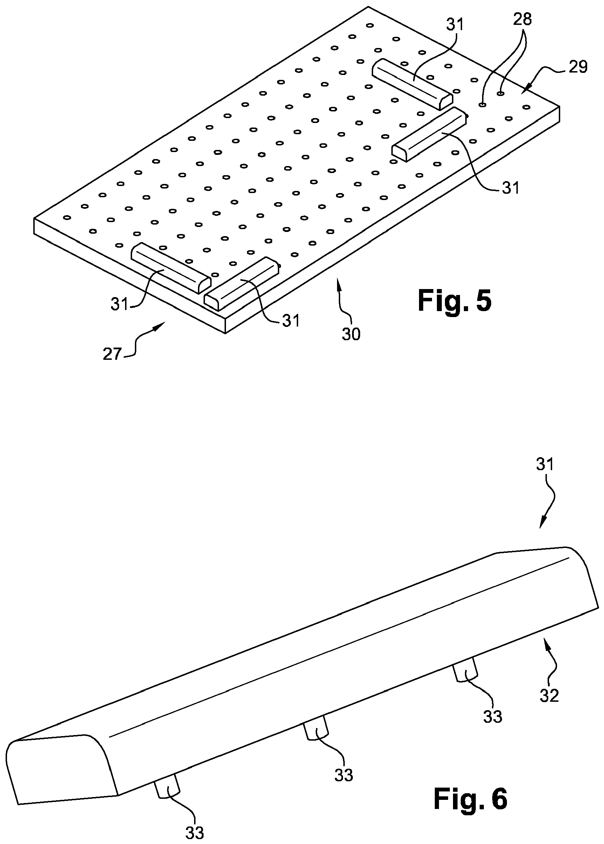

Les figures 5 et 6 illustrent un autre mode de réalisation d'une installation conforme à l'invention. La figure 5 représente un type d'étagère 27 dont au moins un exemplaire équipe une telle installation. Ici, des orifices 28 sont ménagés dans la face supérieure 29 de l'étagère 27. La face supérieure 29 de l'étagère 27 définit une zone de réception d'un appareil électronique 8 à recharger. Les orifices 28 sont régulièrement répartis en rangées parallèles. Le nombre de rangées et/ou le nombre d'orifices par rangée sont adaptés, d'une part, aux dimensions de l'étagère 27 et, d'autre part, au nombre et à la puissance des bobines primaires 23 insérés dans l'étagère 27.

Ici, seule la face supérieure 29 est pourvue d'orifices 28. En variante, la face inférieure 30 de l'étagère 27 est également pourvue d'orifices 28. Les orifices 28 ont une double fonction : ils facilitent la circulation d'air autour des bobines primaires 23 et donc assurent l'évacuation de la chaleur tout en permettant d'optimiser le maintien et le guidage en position des appareils à recharger. En effet, il est important de positionner et de maintenir l'appareil à recharger à l'aplomb de la bobine primaire 23, au plus près de cette dernière pour réaliser une recharge rapide et efficace.

Pour cela plusieurs organes de maintien 31, tel qu'illustré à la figure 6, sont utilisés. On conçoit aisément que la longueur d'un organe de maintien 31 peut être différente de celle illustrée. Pour autant, les organes de maintien 31 sont pourvus, sur leurs faces inférieures 32 d'ergots 33 de forme complémentaire à celle des orifices 28.

La répartition des ergots 33 sur la face 32 est similaire à celles des orifices 28 sur la face 29. Ainsi, il est possible de positionner à façon les organes de maintien 31 sur l'étagère 27. Avantageusement, les organes de maintien 31 sont positionnés deux par deux, de sorte à former un angle droit, comme illustré à la figure 5. Un appareil est maintenu entre deux paires d'organes de maintien 31, ce qui assure son guidage tout en limitant ses mouvements.

En variante, au lieu d'utiliser deux organes de maintien 31 disposés à angle droit, on utilise un élément monobloc configuré en L. Avantageusement, un signal sonore et/ou lumineux indique le bon positionnement des organes de maintien 31 par rapport aux bobines primaires 23 noyées dans l'épaisseur de l'étagère 27, et donc permet de savoir que la charge de l'appareil sera optimale. En variante, la forme et/ou les dimensions des orifices 28 et des ergots 33 sont différentes de celles illustrées. Dans un autre mode de réalisation, le positionnement et le maintien des organes de maintien sur la face supérieure 29 de l'étagère 27 est réalisé par d'autres moyens, par exemple par des bandes auto-agrippantes, par des rails ou autres. De même, les organes de maintien peuvent être monobloc avec le matériau constitutif de la face supérieure 29 de l'étagère 27. On conçoit que, dans un même meuble, on peut positionner différentes étagères 27, chacune ayant des organes de maintien adaptés à un type donné d'appareil à recharger.

On conçoit que les dimensions du meuble 10, et donc le nombre de parties V1, V2 de volume V disponibles pour les utilisateurs varie selon la destination du meuble 10.

Une installation selon l'invention peut comporter plusieurs meubles 10 associés si besoin entre eux, de manière définitive ou non.

L'invention trouve particulièrement son utilisation dans des lieux accueillant plusieurs personnes susceptibles d'avoir chacune au moins un appareil électronique à charger. A titre d'exemple non limitatif, on peut citer un établissement scolaire, de santé, une gare, un aéroport, une administration publique, un centre commercial, un cinéma, une aire d'autoroute.

En variante, une installation conforme à l'invention est disposée dans une zone de passage, par exemple une zone piétonnière. En variante, l'installation est configurée pour fournir un accès payant au chargement par induction.

Dans d'autres modes de réalisation non illustrés, des dispositifs lumineux et/ou sonores indiquent la présence ou non d'un appareil électronique dans un compartiment, ainsi que l'état de charge de l'appareil.

## Revendications

1. Installation de charge par induction d'au moins un appareil électronique (8), comportant au moins une zone (24, 25 ; 29) de réception d'au moins un appareil électronique (8), ladite zone (24, 25 ; 27) étant pourvue, de manière non amovible, d'au moins une bobine primaire (23) reliée (12) à une source d'électricité, l'installation comprenant :
- au moins un module (1) recevant une bobine secondaire, ledit module étant fixé, de manière amovible, sur une des faces (5) d'une paroi (6, 7) de l'appareil électronique (8),
- un meuble (10) pourvu d'au moins une zone (24, 25 ; 29) de réception, fixe, équipée d'au moins une bobine primaire (23) et occupant, au moins partiellement, une partie (V1, V2) du volume (V) du meuble (10), **caractérisée en ce que** le module (1) est configuré en enveloppe souple et **en ce que** le module (1) est pourvu d'une patte (3) équipée d'au moins une prise (4) micro USB adaptée à au moins un type de prise (9) micro USB équipant l'appareil électronique (8).

2. Installation selon la revendication 1, **caractérisée en ce que** le module (1) est fixé sur une face externe (50) d'une paroi (6) d'un appareil électronique (8) par un adhésif non permanent ou par des bandes auto-agrippantes.

3. Installation selon la revendication 1, **caractérisée en ce que** le module (1) est fixé sur une face interne (5) d'une paroi (6) constitutive de l'appareil électronique (8).

4. Installation selon l'une des revendications précédentes, **caractérisée en ce que** chaque zone de réception (24, 25 ; 29) est ménagée dans des étagères (21, 22 ; 27) fixées dans le meuble (10).

5. Installation selon la revendication 4, **caractérisée en ce que** la zone de réception (24, 25 ; 29) est formée par la face supérieure (24, 25 ; 29) de chaque étagère (21, 22 ; 27).

6. Installation selon la revendication 4, **caractérisée en ce que** la zone de réception (29) d'au moins une étagère (27) est pourvue d'au moins un organe de maintien (31) d'un appareil à recharger (8).

7. Installation selon la revendication 6, **caractérisée en ce que** la zone de réception (29) est pourvue d'orifices (28) adaptés pour coopérer avec des ergots (33) ménagés sur une face (32) des organes de maintien (31).

8. Installation selon la revendication 6, **caractérisée en ce que** les organes de maintien (31) sont disposés deux par deux, de sorte à former un angle droit.

9. Installation selon la revendication 1, **caractérisée en ce qu'**une porte (16) assure un accès dédié à une partie (V1, V2) de volume (V) définie.

10. Installation selon la revendication 9, **caractérisée en ce que** chaque porte (16) est pourvue d'une serrure (17) spécifique.
